# FASCICULE DE BREVET EUROPEEN

(11) **EP 4 271 172 B1**
(45) Date de publication et mention de la délivrance du brevet: **21.08.2024**
(21) Numéro de dépôt: 22704430.2
(22) Date de dépôt: 10.02.2022
(51) Int. Cl.: A01G 13/02

(54) **PAILLAGE BIODEGRADABLE**
BIOLOGISCH ABBAUBARE MULCH
BIODEGRADABLE MULCH

(43) Date de publication de la demande: 08.11.2023
(73) Titulaire: Capillum, 63000 Clermont-Ferrand (FR)
(72) Inventeur: TAYLOR, James, 63000 Clermont-Ferrand (FR); DOISNEAU, David, 63000 Clermont-Ferrand (FR)
(74) Mandataire: Gabriel, Franck
(86) Numéro de dépôt international: PCT/IB2022/051185
(87) Numéro de publication internationale: WO 2022/185134

(56) Documents cités:
- US-A1- 2006 150 476
- US-B1- 6 407 039
- MORNARD, FLORENT: "Test d'un paillage en laine de mouton aiguilletée", 30 December 2020 (2020-12-30), XP002804716, Retrieved from the Internet <URL:https://web.archive.org/web/20201230063731/https://laines.eu/test-dun-paillage-en-laine-de-mouton-aiguilletee/> [retrieved on 20211110]
- CHRISTOL LÉA: "Capillum collecte et valorise les cheveux | Bref Eco", 18 February 2020 (2020-02-18), XP055858806, Retrieved from the Internet <URL:https://www.brefeco.com/actualite/rse/capillum-collecte-et-valorise-les-cheveux> [retrieved on 20211108]

## Description

### DOMAINE TECHNIQUE DE L'INVENTION

La présente invention concerne un film de paillage horticole constitué d'un agencement de fibres non tissées.

### ETAT DE LA TECHNIQUE ANTERIEURE

De nombreux types de paillage sont utilisés dans le domaine horticole, pour faciliter la croissance des plantes, les protéger et permettre un meilleur contrôle de l'hygrométrie du sol. Le plupart des paillages utilisent des matériaux synthétiques non biodégradables.

Par exemple, le document FR2768018 décrit un tapis de paillage horticole, son procédé de réalisation industrielle, son utilisation pour les massifs floraux. Le tapis de paillage est constitué de fragments de matériaux divers, dérivés du bois, matières synthétiques, minéraux, colles sur une toile perméable à l'eau. L'invention concerne également le procédé permettant de réaliser le tapis de paillage consistant après sélection des fragments de matériaux choisis selon leurs caractéristiques physiques, mécaniques, esthétiques, à les imprégner de colle et de colorant puis à les déposer sur une toile perméable à l'eau laquelle est disposée sur un film plastique sur lequel la colle n'adhère pas. Ce paillage est utilisé pour entourer les compositions, décorations florales et leurs bordures. Ce type de film est complexe à réaliser et non biodégradable.

D'autres paillages utilisent des matériaux biodégradables. Par exemple, le document EP3469888 décrit un film de paillage biodégradable comportant un substrat de base constitué de papier sur lequel un enduit est appliqué.

Le document WO2006076057 décrit un paillage constitué de fibres naturelles biodégradables telles que des cheveux, des poils animaux, des fibres de coco, de coton, de maïs, ou autres. Le document décrit entre autres un paillage comportant des cheveux, des poils animaux et une ou plusieurs fibres naturelles parmi les fibres de coco, de coton, de maïs, ou autres. Les caractéristiques de résistance mécanique de ce type de paillage sont cependant limitées.

Le document « Test d'un paillage en laine de mouton aiguilletée », de Florent MORNARD, publié le 30 décembre 2020, décrit un test effectué sur un paillage mono-fibre en laine de mouton. Ce paillage, faisant appel uniquement à des fibres d'origine animale, présente un caractère écologique perfectible. Par ailleurs, les caractéristiques mécaniques de ce paillage mono-fibre étant limitées, le paillage présente des risques de fissures ou ruptures lorsqu'il est manipulé.

Pour pallier les différents inconvénients préalablement évoqués, l'invention prévoit différents moyens techniques.

### EXPOSE DE L'INVENTION

Tout d'abord, un premier objet de l'invention consiste à permettre la mise en oeuvre de paillage à faible coût et en faisant une récupération et recyclage des chutes de cheveux des salons de coiffures.

Un autre objectif de l'invention consiste à prévoir un paillage comportant des matériaux biodégradables naturels.

Un autre objectif de l'invention consiste à prévoir un paillage dont les caractéristiques mécaniques, et notamment la résistance à la traction, sont optimales.

Un autre objectif de l'invention consiste à prévoir un paillage dont les caractéristiques mécaniques et visuelles, en particulier en surface, sont homogènes et constantes.

Encore un autre objectif de l'invention consiste à prévoir un paillage présentant une grande facilité de stockage avant mise en place en milieu naturel et un respect du milieu naturel environnant.

Pour ce faire, l'invention prévoit un film de paillage biodégradable horticole constitué d'un agencement de fibres naturelles non tissés formant un plan longitudinal, ledit agencement comportant des cheveux (ou fibres capillaires) et des fibres laineuses (laine) mélangées et assemblées en agencement consolidé non tissé, les cheveux constituant un taux massique d'au moins 50% du total des fibres, les fibres laineuses constituants un taux massique supérieur à 20% de l'ensemble des fibres, et plus préférentiellement un taux massique supérieur à 30% de l'ensemble des fibres, et encore plus préférentiellement un taux massique supérieur à 40% de l'ensemble des fibres du film.

L'utilisation de deux types de fibres complémentaires, de préférence sans aucun autre matériau, constituant ou additif, permet d'obtenir des propriétés mécaniques considérablement améliorées en regard d'un film comportant un seul type de fibres. Par ailleurs, les proportions massiques prévues permettent encore d'optimiser les performances mécaniques. Enfin, le fait de combiner et enchevêtrer entre elles ces deux types de fibres écaillées induit un double effet de maintien, soit celui généré par la consolidation et celui des micro-accrochages entre les écailles des fibres.

Selon un mode de réalisation avantageux, la consolidation du film est réalisée par la présence d'une pluralité de ponts traversant au moins une partie des couches de fibres, lesdits ponts étant répartis sur l'ensemble de la surface du film de paillage.

De manière avantageuse, les ponts traversant sont réalisés par aiguilletage ou hydroliage ou par jets d'air.

Les filaments agencés sensiblement transversalement sont répartis sensiblement uniformément sur la surface du film et forment un moyen de liaison mécanique entre les filaments orientés sensiblement longitudinalement. Le film présente ainsi des caractéristiques de résistance mécanique particulièrement avantageuses.

Selon un mode de réalisation avantageux, le film de paillage biodégradable est constitué uniquement de fibres capillaires et de fibres laineuses.

Ce mode de réalisation, sans additif ou complément ou réactif ou autre matériau ou couche de support, permet d'obtenir un produit 100% naturel, écologique, biodégradable sans résidu.

De manière avantageuse, le film est enroulé pour former un rouleau facilitant le stockage et déroulable pour mise en place sur une surface horticole à habiller.

Selon encore un mode de réalisation avantageux, le film biodégradable comporte un mélange de fibres capillaires et de fibres laineuses préalablement dispersées et mélangées pour constituer des lots d'au moins 10 kg de fibres dispersées et mélangées de façon à former un ensemble aléatoire de fibres hétérogènes avant leur mise en forme sous forme de film.

De manière avantageuse, les fibres laineuses sont des fibres de laine effilochée écrue. Du fait de sa structure hélicoïdale, la laine effilochée écrue procure un effet de cohésion avec les autres fibres, pour une meilleure résistance mécanique du film. On utilise avantageusement de la laine de mouton ou de chèvre.

Selon encore un mode de réalisation avantageux, le film est formé en laizes 6. On prévoit par exemple des laizes de 80cm de large, de 5m de long et 4mm d'épaisseur, avec une densité de 400g/m2. La densité du film se situe entre 300 et 1200g/m2, et préférentiellement entre 350 et à 800g/m2, et encore plus préférentiellement entre 350 et 500g/m2. Ce type de format est particulièrement adapté au paillage, et permet un bon compromis entre les facilités de stockage par enroulement et les caractéristiques avantageuses de rétention d'eau et protection contre la germination.

### DESCRIPTION DES FIGURES

Tous les détails de réalisation sont donnés dans la description qui suit, complétée par les figures 1 à 5, présentées uniquement à des fins d'exemples non limitatifs, et dans lesquelles:
- la figure 1 est une représentation schématique en vue de dessus de films biodégradables non tissés consolidés de cheveux et de laine ;
- la figure 2 est une coupe schématique dans le plan transversal de la largeur d'un exemple de film biodégradable réalisé par un agencement non tissé consolidé de cheveux et de laine;
- la figure 3 est une coupe schématique dans le plan transversal de la hauteur d'un exemple de film biodégradable réalisé par un agencement non tissé consolidé de cheveux et de laine;
- la figure 4 est une représentation schématique illustrant une phase de consolidation d'un exemple d'agencement non tissé de cheveux et de laine par aiguilletage ;
- la figure 5 illustre un tableau de synthèse présentant les résultats d'essais pour comparer les propriétés mécaniques de plusieurs exemples de films biodégradables non tissées consolidés de cheveux et de laine.

### DESCRIPTION DETAILLEE DE L'INVENTION

### Définitions

Un non-tissé non consolidé se compose d'un ensemble de fibres simplement disposées ensemble en vrac, non liées entre elles. La solidité d'un non-tissé non consolidé repose d'une part sur la solidité et la résistance des fibres elles-mêmes et d'autre part sur les forces qui lient ces fibres entre elles.

On entend par film non-tissé consolidé un ensemble constitué d'une pluralité de couches de filaments ou fibres maintenues entre elles par une pluralité de ponts traversant au moins une portion des couches. Les ponts sont réalisés par des fibres orientées transversalement au plan principal du film et enchevêtrées dans les couches de fibres orientées dans le plan principal du film.

Plusieurs procédés de consolidation peuvent être utilisés, comme par exemple l'aiguilletage ou l'hydroliage ou par jets d'air.

On entend par aiguilletage un procédé de consolidation qui consiste à enchevêtrer mécaniquement une ou plusieurs couches de fibres ou filaments à l'aide de multiples aiguilles à crocheter.

On entend par hydroliage ou enchevêtrement par eau un procédé d'assemblage mécanique par consolidation en utilisant une pluralité de jets d'eau à haute pression traversant un film à consolider.

Avant de consolider les fibres ou les filaments, une étape d'ouvraison des fibres est préférentiellement effectuée.

On entend par ouvraison un procédé mécanique consistant à décomposer les couches compressées ou amas de fibres en petites touffes pour en faciliter le mélange. En entrée de l'ouvreuse, des amas de laine effilochée écrue compact et des cheveux non mélangés sont transformés en un mélange homogène de laine effilochée écrue et de cheveux. L'ouvreuse est alimentée en laine effilochée écrue compact et en filaments de cheveux bruts.

On entend par consolidation à double effet d'accrochage un mode de consolidation d'un film comportant des fibres écaillées tels que les cheveux et la laine.

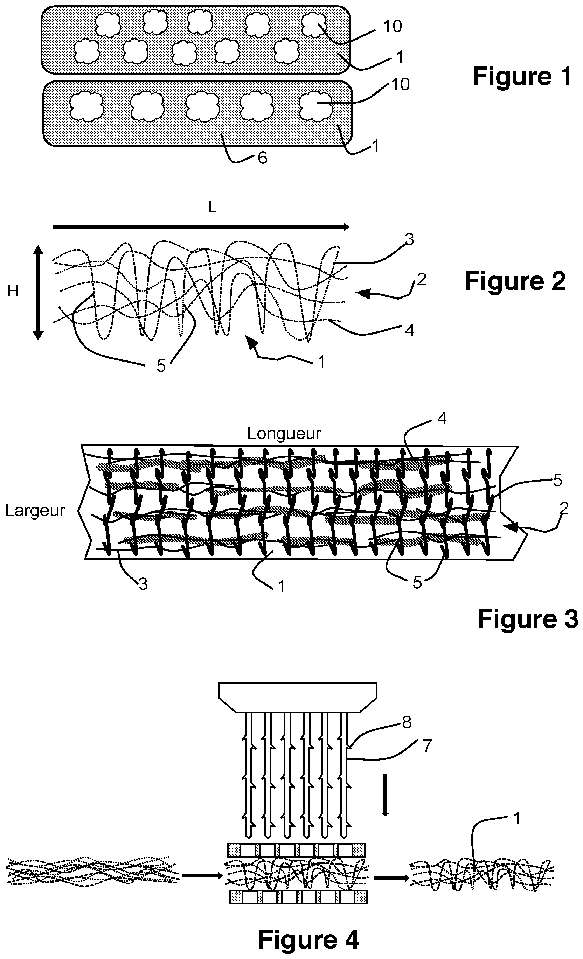

La figure 1 illustre un exemple de film 1 biodégradable. Dans cet exemple, deux laizes 6 de film 1 sont posées sur le sol et des cultures 10 sont réparties sur la surface des laizes. Pour permettre la mise en place et la croissance des cultures, les laizes comportent une pluralité de trous réalisés soit lors de la fabrication, ou lors des plantations.

Les films 1 biodégradables sont réalisés à l'aide de fibres naturelles 2 constituées de cheveux 3 et des fibres de laine 4. Les fibres naturelles utilisées sont de toutes longueurs, y compris les cheveux courts. Les figures 2 et 3 illustrent, de façon schématique, des exemples de mise en oeuvre de films 1 avec ces fibres.

La figure 2 montre un exemple d'un film 1 en coupe transversal dans le sens de la largeur. Tel qu'illustré, le film comporte une pluralité de fibres naturelles 2, essentiellement des cheveux 3 et des fibres laineuses 4 enchevêtrées entre elles grâce à une mise en forme avec consolidation.

Le procédé d'obtention du film comporte deux phases principales. La première phase consiste à réaliser une couche homogène avec un mélange de cheveux et de laine dans les proportions massiques souhaitées. La seconde phase, dites de consolidation, permet de consolider la ou les couches pour obtenir un film présentant d'excellentes propriétés mécaniques.

Pour réaliser la première phase, les cheveux sont mélangés avec la laine écrue en prévoyant un taux de laine supérieur à 20% du mélange total. L'utilisation de laine effilochée écrue permet de maintenir la cohésion de l'ensemble des fibres capillaires.

Les cheveux et la laine sont disposés dans des chargeuses-peseuses qui permettent d'effectuer un pesage des fibres pour obtenir les proportions massiques souhaitées de chacun des types de fibres (soit le pourcentage de cheveux et le pourcentage de laine en regard du poids total des cheveux et de la laine), puis les cheveux tombent sur un tapis roulant où ils sont humidifiés pour faciliter la cohésion entre les fibres, puis, la laine tombe sur le tapis. L'ensemble des fibres (cheveux et laine) passent alors dans une ouvreuse qui permet d'ouvrir et mélanger les fibres avant d'être transportées par air où un aimant permet de retirer les objets métalliques pouvant demeurer dans les fibres avant de passer dans une ouvreuse plus fine pour mélanger plus intimement l'ensemble. Le tout est ensuite transporté par air vers la nappeuse. La nappeuse permet de créer une nappe homogène constituée du mélange cheveux et laine dans les proportions choisies au départ.

Lors de la phase de consolidation, les couches de fibres nappées sont ensuite consolidées à l'aide d'une multiplicité de ponts 5 transversaux aux couches répartis sur l'ensemble de la surface du film. Pour créer les ponts, on utilise de préférence un procédé d'aiguilletage. La figure 4 illustre, de façon schématique, un exemple d'opération d'aiguilletage. Il s'agit d'un procédé d'assemblage mécanique permettant d'effectuer une consolidation d'un film non-tissé déjà formé par nappage. Une pluralité d'aiguilles 7 pourvues de crochets 8 sont agencées transversalement au plan principal ou à la surface de l'agencement de fibres, et effectuent un mouvement d'aller-retour à travers le film. Une partie des fibres de laine et/ou de cheveux sont accrochées par les crochets 8 et sont entraînées suivant le mouvement transversal des aiguilles 7, créant ainsi un enchevêtrement avec les fibres de laine ou de cheveux orientées longitudinalement. Les aiguilles sont agencées pour former une surface d'aiguilletage, avec une densité adaptée au produit à fabriquer. Par exemple, certains essais ont été réalisés avec une densité de 3660 aiguilles par m2 pour une première phase d'aiguilletage, et une densité de 7000 aiguilles par m2 pour une seconde phase. Chaque phase comporte avantageusement plusieurs mouvements d'aller-retour des aiguilles.

Enfin, les aiguilles peuvent être agencées sur une seule face, ou en opposition, sur les deux faces du film à consolider. La figure 3 illustre, de façon schématique, un exemple de film 1 obtenu par consolidation avec des aiguilles en opposition. La figure 3 montre le film 1 en coupe transversale dans le sens de la hauteur. On observe les cheveux 3 et les fibres de laine 4, qui sont globalement dans le sens de la longueur du film. Les ponts 5, formés par les fibres de cheveux et/ou de laine sont agencés dans le sens de hauteur.

D'autres procédés peuvent également être utilisés, comme par exemple l'hydroliage ou la consolidation par jets d'eau à haute pression.

Selon encore un mode de réalisation avantageux, le film biodégradable comporte un mélange de fibres capillaires et de fibres laineuses préalablement dispersées et mélangées pour constituer des lots d'au moins 10 kg de fibres dispersées et mélangées de façon à former un ensemble aléatoire de fibres hétérogènes avant leur mise en forme sous forme de film.

Par exemple, lors d'essais, les fibres capillaires utilisées provenaient de cheveux contenus dans des sacs de 1m3 soit environ 100 kg, représentant environ 125000 coupes de cheveux avec des teneurs différentes et une source d'homogénéité fiable et récurrente. Les cheveux à recycler sont le plus souvent issus de salon de coiffure. Le regroupement des cheveux ainsi récupérés permet d'utiliser des cheveux de multiples personnes, avec des caractéristiques, en particulier de couleurs, très variées, et permet d'obtenir un paillage de caractéristiques de couleurs et de résistance mécanique plus uniformes.

La densité du paillage tel que préalablement décrit se situe entre 0,07g/cm3 et 0,15g/cm3, et plus préférentiellement entre 0,09 et 0,12 g/cm3.

### Tests comparatifs de résistance mécanique

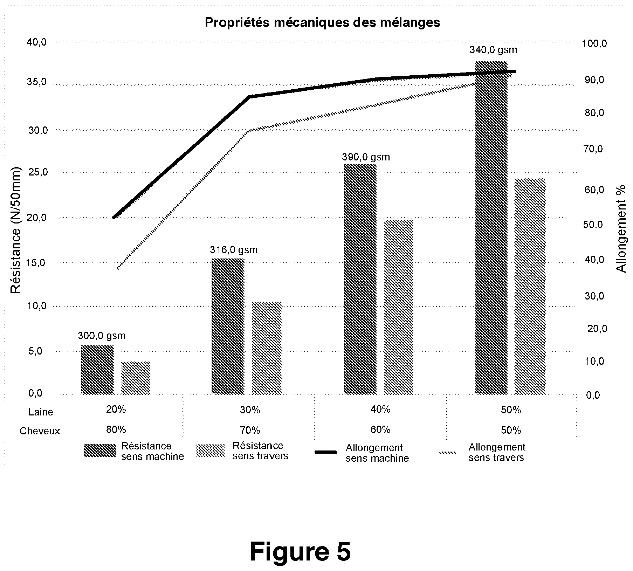

La figure 5 présente un tableau comparatif issu d'essais réalisés avec des paillages selon l'invention. Le tableau illustre d'une part les valeurs de résistance dans le sens machine ou longueur et dans le sens transversal ou largeur en N/50mm (échelle de gauche) et les valeurs d'allongement dans le sens machine ou longueur et dans le sens transversal ou largeur en pourcentage (échelle de droite). Les comparaisons ont été effectuées avec des films comportant diverses proportions massiques de laine et de cheveux, à savoir 20% de laine avec 80% de cheveux, 30% de laine avec 70% de cheveux, 40% de laine avec 60% de cheveux, et 50% de laine avec 50% de cheveux. On observe que la résistance mécanique augmente dès qu'on prévoit un mélange de fibres avec plus de 20% de laine, plus préférentiellement un taux supérieur à 30% de laine et encore plus préférentiellement au moins 40% de laine. On observe en outre que l'ajout de laine effilochée améliore considérablement les propriétés mécaniques du non tissé (par un facteur 3 à 30% de laine et par un facteur de presque 8 à 50% en sens machine). Cette augmentation est particulièrement avantageuse pour la résistance mécanique dans le sens de la longueur, ce qui permet de manipuler les films de grande longueur sans risque de créer des ruptures accidentelles. Ces propriétés de haute résistance sont particulièrement avantageuses dans le domaine du jardinage ou des cultures où des films de grandes longueurs doivent être manipulés et souvent déplacés en les tirant sur le sol, avec de fortes sollicitations mécaniques.

Selon les tests effectués, en sens machine on obtient par exemple une résistance à une charge de 15 N/50mm pour un film avec 70% de cheveux et 30% de laine (densité de 316g/m2) et de 25 N/50mm pour un film avec 60% de cheveux et 40% de laine (densité de 390 g/m2), comparativement à une résistance de seulement 5 N/50mm pour un film avec 80% de cheveux et 20% de laine (densité de 300 g/m2).

On obtient par exemple un allongement dans le sens machine supérieure à 80% pour un film avec 60% de cheveux et 40% de laine (densité 390g/m2), et un allongement dans le sens machine équivalent à 90% pour un film avec 50% de cheveux et 50% de laine (densité de 340g/m2), comparativement à un allongement dans le sens machine de seulement 50% pour un film avec 80% de cheveux et 20% de laine (densité de 300g/m2).

### Numéros de référence employés sur les figures

- 1: Film de paillage
- 2: Fibres naturelles non tissées
- 3: Cheveux
- 4: Laine
- 5: Ponts
- 6: Laizes
- 7: Aiguille
- 8: Crochet
- 9: ---
- 10: Culture
- 11: -----
- 12: -----

## Revendications

1. Film (1) de paillage biodégradable horticole constitué d'un agencement de fibres (2) naturelles non tissés formant un plan longitudinal, ledit agencement comportant des cheveux (3) et des fibres laineuses (4) mélangés et assemblés en agencement consolidé non tissé, les cheveux constituant un taux massique d'au moins 50% du total des fibres, les fibres laineuses constituants un taux massique supérieur à 20% de l'ensemble des fibres, et plus préférentiellement un taux massique supérieur à 30% de l'ensemble des fibres, et encore plus préférentiellement un taux massique supérieur à 40% de l'ensemble des fibres du film.

2. Film de paillage biodégradable selon la revendication 1, dans lequel la consolidation du film est réalisée par la présence d'une pluralité de ponts (5) traversant au moins une partie des couches de fibres, lesdits ponts étant répartis sur l'ensemble de la surface du film de paillage.

3. Film de paillage biodégradable selon la revendication 2, dans lequel les ponts (5) traversant sont réalisés par aiguilletage ou hydroliage ou par jets d'air.

4. Film de paillage biodégradable selon l'une quelconque des revendications 1 à 3, constitué uniquement de fibres capillaires et laineuses.

5. Film de paillage biodégradable selon l'une quelconque des revendications 1 à 4, dans lequel les fibres laineuses (4) sont des fibres de laine effilochée écrue.

6. Film de paillage biodégradable selon l'une quelconque des revendications 1 à 5, enroulé pour former un rouleau facilitant le stockage et déroulable pour mise en place sur une surface horticole à habiller.

7. Film de paillage biodégradable selon l'une quelconque des revendications 1 à 6, formé en laizes (6).

## Patentansprüche

1. Biologisch abbaubare Gartenbau-Mulchfolie (1), die aus einer Anordnung von natürlichen Fasern (2) besteht, die nicht gewebt sind und eine Längsebene bilden, wobei die Anordnung Haare (3) und Wollfasern (4) enthält, die gemischt und zu einer verfestigten nicht gewebten Anordnung zusammengefügt sind, wobei die Haare einen Massenanteil von mindestens 50 % der Gesamtfasern ausmachen, die Wollfasern einen Massenanteil von mehr als 20 % der Gesamtheit der Fasern, und noch bevorzugter einen Massenanteil von mehr als 30 % der Gesamtheit der Fasern, und noch bevorzugter einen Massenanteil von mehr als 40 % der Gesamtheit der Fasern des Films bilden.

2. Biologisch abbaubare Mulchfolie nach Anspruch 1, bei der die Verfestigung der Folie durch das Vorhandensein einer Vielzahl von Brücken (5) erreicht wird, die mindestens einen Teil der Faserschichten durchdringen, wobei die Brücken über die gesamte Oberfläche der Mulchfolie verteilt sind.

3. Biologisch abbaubare Mulchfolie nach Anspruch 2, wobei die durchgehenden Brücken (5) durch Vernadelung oder Hydroliasing oder durch Luftstrahlen hergestellt werden.

4. Biologisch abbaubare Mulchfolie nach einem der Ansprüche 1 bis 3, die nur aus Haar- und Wollfasern besteht.

5. Biologisch abbaubare Mulchfolie nach einem der Ansprüche 1 bis 4, wobei die wolligen Fasern (4) Fasern aus zerfaserter, ungekämmter Wolle sind.

6. Biologisch abbaubare Mulchfolie nach einem der Ansprüche 1 bis 5, die zu einer Rolle aufgewickelt ist, um die Lagerung zu erleichtern, und die zum Anbringen auf einer zu verkleidenden Gartenbaufläche abgerollt werden kann.

7. Biologisch abbaubare Mulchfolie nach einem der Ansprüche 1 bis 6, die zu Bahnen (6) geformt ist.

## Claims

1. Horticultural biodegradable mulch film (1) consisting of an arrangement of natural non-woven fibers (2) forming a longitudinal plane, said arrangement comprising hair (3) and woolly fibers (4) mixed and assembled in a non-woven consolidated arrangement, the hair constituting a mass rate of at least 50% of the total fibers, the woolly fibers making up more than 20% by weight of all the fibers, and more preferably more than 30% by weight of all the fibers, and even more preferably more than 40% by weight of all the fibers in the film.

2. Biodegradable mulch film according to claim 1, in which the consolidation of the film is achieved by the presence of a plurality of bridges (5) passing through at least some of the fiber layers, said bridges being distributed over the entire surface of the mulch film.

3. Biodegradable mulch film according to claim 2, wherein the through bridges (5) are produced by needling or hydro-bonding or by air jets.

4. Biodegradable mulch film according to any one of claims 1 to 3, consisting solely of capillary and woolly fibers.

5. Biodegradable mulch film according to any one of claims 1 to 4, wherein the woollen fibers (4) are unbleached frayed wool fibers.

6. Biodegradable mulch film according to any one of claims 1 to 5, wound to form a roll for easy storage and unrollable for placement on a horticultural surface to be covered.

7. Biodegradable mulch film according to any one of claims 1 to 6, formed into strips (6).
